# EUROPÄISCHE PATENTANMELDUNG

(11) **EP 1 352 698 A1**
(43) Veröffentlichungstag der Anmeldung: **15.10.2003**
(21) Anmeldenummer: 02008385.3
(22) Anmeldetag: 12.04.2002
(51) Int. Cl.: B23K 9/12, B23K 9/095, B23K 9/133

(54) **Drahtvorschubvorrichtung für Schweissanlagen mit Einrichtung zum Messen der Drahtgeschwindigkeit**

(71) Anmelder: Mechafin AG, 8954 Geroldswil (CH)
(72) Erfinder: Hess, Andreas, 6208 Oberkirch (CH)
(74) Vertreter: Blum, Rudolf Emil Ernst

(57) **Zusammenfassung**

Der Schweissdraht (2) wird zwischen den Rollen (16) eines Vorschubmittels (1) durchgeführt. Danach wird der Schweissdraht (2) an einem optischen Sensor (3) vorbeigeführt. Dieser misst die Geschwindigkeit des Schweissdrahtes (2). Das Messsignal des optischen Sensors (3) wird verwendet um den Motor (17) des Vorschubmittels (1) zu regeln. Die Schweissgutzufuhr wird dadurch präziser. Die Schweissnaht wird qualitativ besser.

## Beschreibung

Die Erfindung bezieht sich auf eine Drahtvorschubvorrichtung für Drahtschweissanlagen, eine Drahtschweissanlage und ein Verfahren gemäss Oberbegriff der unabhängigen Ansprüche.

Vorrichtungen für den Drahtvorschub bei Drahtschweissanlagen sind z.B. in WO 98/26895 beschrieben. Vorrichtungen dieser Art werden beim Drahtschweissen verwendet, um den Schweissdraht von der Spule abzuwickeln und z.B. über ein Schlauchpaket dem Schweissbrenner zuzuführen. Die Vorrichtungen besitzen Rollen, zwischen denen der Draht führbar ist. Mindestens eine der Rollen ist angetrieben. Die Vorrichtungen sind gewöhnlich so ausgestaltet, dass sie mit bestimmten Drahtgeschwindigkeiten betreibbar sind. Die Vorrichtungen weisen dazu meistens einen geregelten Antriebsmotor mit einem Drehzahlmesser auf.

Bei den bekannten Vorrichtungen ist die Schweissnaht oft ungleichmässig und unpräzis und es kommt unter Umständen sogar zu Störungen des Schweissvorganges.

Es stellt sich daher die Aufgabe eine Vorrichtung der eingangs genannten Art bereitzustellen, welche präziser arbeitet als bekannte Vorrichtungen.

Diese Aufgabe wird von Anspruch 1 gelöst, indem ein Mittel zur Messung der Drahtgeschwindigkeit so ausgestaltet und angeordnet ist, dass die Drahtgeschwindigkeit berührungslos und direkt am Draht, also nicht am Vorschubmittel, messbar ist. Dieser Lösung liegt die Erkenntnis zugrunde, dass die konventionelle Messung durch Schlupf zwischen Draht und Rollen verfälscht werden kann, während dies bei berührungsloser Messung direkt am Draht nicht der Fall ist.

Eine weitere Verbesserung ergibt sich, wenn das Mittel zur Messung der Drahtgeschwindigkeit in Vorschubrichtung nach dem Schlauchpacket angeordnet ist. Dadurch ist es möglich Schwankungen der Schweissgutzufuhr, die bei Bewegung des Schlauchpaketes aus der Variation der im Schlauchpaket aufgenommenen Drahtmenge resultieren, zu messen und durch Regelungsmassnahmen auszugleichen.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 eine Ausführungsform der erfindungsgemässen Drahtvorschubvorrichtung,
Fig. 2 eine Ausführungsform der erfindungsgemässe Drahtvorschubvorrichtung mit einem Schlauchpaket,
Fig. 3 eine Ausführungsform des erfindungsgemässen Mittels zur Messung der Drahtgeschwindigkeit,
Fig. 4 ein Blockschaltbild der Integration der erfindungsgemässen Drahtvorschubvorrichtung in eine Schweissanlage,
Fig. 5 ein Flussdiagramm eines Verfahrens zur Positionierung des Schweissdrahtes bei einer erfindungsgemässen Schweissanlage,
Fig. 6 ein Flussdiagramm eines Verfahrens zur Korrektur der Folgen von verminderter Schweissgutzufuhr bei einer erfindungsgemässen Schweissanlage.

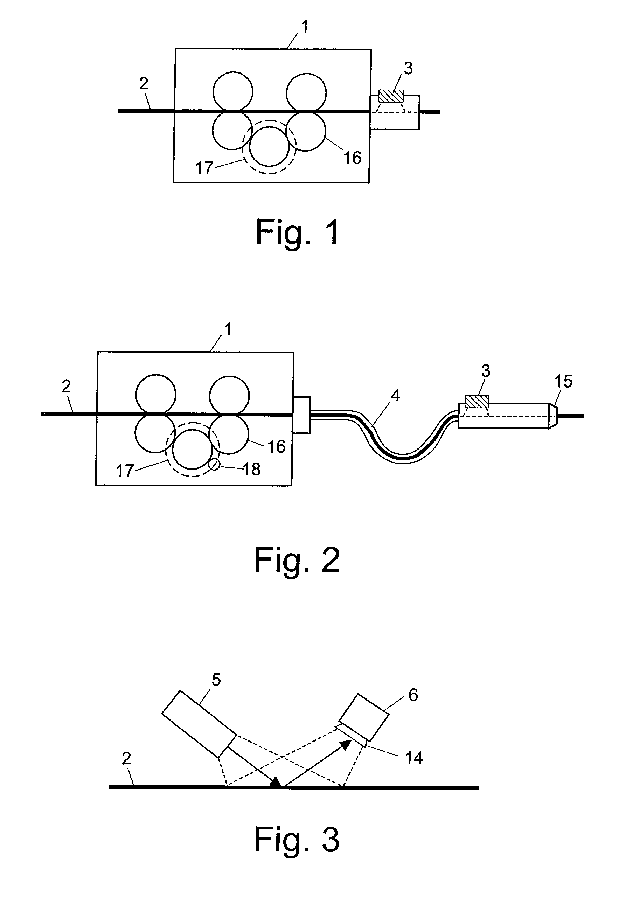

Fig. 1 zeigt eine erste Ausführungsform der erfindungsgemässen Drahtvorschubvorrichtung. Der Schweissdraht 2 ist durch das Vorschubmittel 1 geführt. Das Vorschubmittel 1 weist Rollen 16 und einen Motor 17 auf. Der Draht 2 wird zwischen den Rollen 16 hindurchgeführt. Mindestens eine der Rollen 16 ist mit Motor 17 antriebsverbunden. An der Austrittsstelle des Drahtes 2 aus dem Vorschubmittel 1 ist ein Sensor 3 zur optischen Messung der Drahtgeschwindigkeit angeordnet. Bei Schlupf zwischen Draht 2 und Rolle 16 kann mit dem Sensor 3 eine Abweichung von der Soll-Drahtgeschwindigkeit erkannt werden. Die Soll-Drahtgeschwindigkeit wird in solchen Fällen über eine Regelung der Antriebsleistung bzw. des Motors 17 erreicht. Das genaue Einhalten der Soll-Drahtgeschwindigkeit hat den Vorteil, dass die Schweissnaht präziser und gleichmässiger wird als bei bekannten Schweissanlagen. Die gezeigte Ausführungsform eignet sich sowohl für Handschweissgeräte als auch für Roboterschweissanlagen. Handschweissgeräte sind dabei meist für eine konstante Soll-Drahtgeschwindigkeit ausgestaltet, wobei die Geräte im On/Off Betrieb verwendet werden. Bei Roboterschweissanlagen wird dagegen die Soll-Drahtgeschwindigkeit in bestimmten Fällen dynamisch bzw. während des Schweissvorganges geändert.

Fig. 2 zeigt eine zweite Ausführungsform der erfindungsgemässen Drahtvorschubvorrichtung. Die Ausführungsform entspricht der von Fig. 1, nur ist der Sensor 3 nicht an der Austrittsstelle aus dem Vorschubmittel 1 angeordnet, sondern in der Vorschubrichtung nach einem Schlauchpaket 4. Die Anordnung nach dem Schlauchpaket 4 hat den Vorteil, das Schwankungen in der Schweissgutzufuhr, die von der unterschiedlichen Anordnung des Schlauchpaketes 4 herrühren, gemessen und ausgeglichen werden können. Die Länge des Schweissdrahtabschnittes, der vom Schlauchpaket aufgenommen wird, variiert mit der räumlichen Anordnung des Schlauchpaketes. Diese Variation kann bis zu ± 1 cm ausmachen. Das Schlauchpaket nimmt so z.B. im gekrümmten, bzw. gerollten Zustand eine andere Drahtmenge auf als im ausgerollten Zustand. Insbesondere bei Roboterschweissanlagen, aber auch bei Handschweissgeräten ändert sich beim Schweissen die räumliche Anordnung des Schlauchpaketes ständig. Die daraus resultierenden Schwankungen sind mit der erfindungsgemässen Vorrichtung messbar.

Das Ausmass der von Schlupf und Schlauchpaket verursachten Schwankungen der Schweissgutzufuhr wird von der weiter unten beschriebenen Vorschubsteuerung 11 oder der Anlagensteuerung 10 überwacht. Die Schwankungen werden vorzugsweise durch eine Regelungsmassnahme oder eine geeignete Kombination von Regelungsmassnahmen kompensiert. Derartige Regelungsmassnahmen sind insbesondere die Regelung der Leistung des Antriebes 17 des Vorschubmittels 1, die Regelung der Schweissgeschwindigkeit, d.h. der Geschwindigkeit des Schweisskopfes relativ zum Werkstück, und die Regelung des Schweissstromes.

In der gezeigten Ausführungsform der Vorrichtung ist der Sensor 3 direkt nach dem Schlauchpaket 4 angeordnet. Der Abstand zwischen Sensor 3 und Kontaktdüse 15 ist ca. 15-20 cm. Dabei befindet sich zwischen dem Sensor 3 und der Kontaktdüse 15 kein flexibles Drahtführungsmittel mehr. So ist es möglich die Schweissgutzufuhr präzise zu messen und den Schweissvorgang ensprechend zu regeln. Eine besonders genaue Messung der Schweissgutzufuhr ergibt sich, wenn der Sensor 3 in der Vorschubrichtung unmittelbar vor der Kontaktdüse 15, also in möglichst geringer Entfernung vom Schweisspunkt, angeordnet wird. Der optimale Schweisspunkt liegt ca. 1 cm vor der Kontaktdüse 15.

Die bevorzugte Ausführungsform der Vorrichtung weist zudem einen Drehzahlmesser 18 zum Messen der Drehzahl des Motors 17 oder einer Rolle 16 auf, wie er von konventionellen Drahtvorschubvorrichtungen her bekannt ist. Der Vergleich der damit gemessenen Drehzahl und der optisch gemessenen Drahtgeschwindigkeit ermöglicht eine Schlupfüberwachung.

Fig. 3 zeigt eine Ausführungsform des erfindungsgemässen Mittels zur berührungslosen Messung der Drahtgeschwindigkeit. Eine Lichtquelle 5, insbesondere eine LED, beleuchtet einen Abschnitt des Drahtes 2. Ein CCD-Sensor 6 ist auf die Oberfläche des Drahtes gerichtet. Vorzugsweise ist zwischen dem Draht und dem CCD-Sensor eine Abbildungsoptik 14 vorgesehen, die ein Bild der Drahtoberfläche auf den CCD-Sensor wirft. Mit dem CCD-Sensor 6 wird die Textur auf der Drahtoberfläche erfasst. Der CCD-Sensor 6 ist vorzugsweise ein zweidimensionales Pixel-Array. Es wäre jedoch auch ein eindimensionales Array ausreichend. Die Bilder werden sequentiell miteinander verglichen und es wird dadurch die Geschwindigkeit der Oberflächentextur des Drahtes und damit jene des Drahtes 2 ermittelt. Sensoren wie diese sind von optischen Computermäusen her bekannt. Sie werden deshalb in grossen Serien hergestellt und haben dadurch den Vorteil preisgünstig zu sein. Der Sensor misst die Geschwindigkeit in ein oder zwei Dimensionen. Weiterverarbeitet wird mindestens die Geschwindigkeitskomponente in der Vorschubrichtung. Der Sensor ist dazu vorzugsweise entsprechend der Vorschubrichtung ausgerichtet. Bei der bevorzugten Ausführungsform ist der Geschwindigkeitsmesswert am Sensorausgang ein analoges Spannungssignal mit Werten zwischen 0V und 5V. 3V entspricht dabei einer Geschwindigkeit von ca. 4m Draht/min. Die Ausgabe als analoges Signal hat den Vorteil, dass die erfindungsgemässe Vorrichtung leichter in bestehende Systeme integriert werden kann. Das Signal enspricht so gewandelt dein von konventionellen Mitteln zur Messung der Vorschubgeschwindigkeit, wie z.B. Drehzahlmessern. Fehlt der Draht 2, so generiert der Sensor 3 ein Signal, dass der Geschwindigkeit Null entspricht und/oder er generiert ein weiteres Signal, dass speziell für das Anzeigen des Fehlen des Drahtes bestimmt ist. Dieses weitere Signal wird im Folgenden "Fehlzustandssignal" genannt.

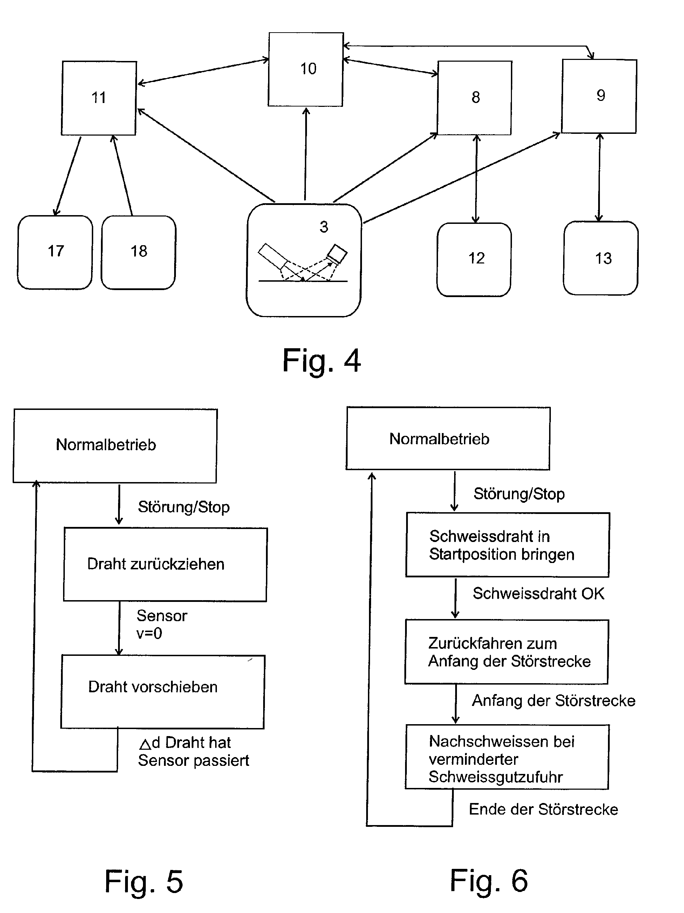

Fig. 4 zeigt ein Blockschaltbild einer Ausführung der erfindungsgemässen Schweissanlage mit einem optischen Sensor 3 zur Messung der Drahtgeschwindigkeit. Der Messwert des Sensors 3 wird einer Vorschubsteuerung 11, einer zentralen Schweissanlagensteuerung 10, einer Schweissstromsteuerung 8 und einer Robotersteuerung 9 zugeführt. Die Vorschubsteuerung 11 regelt den Motor 17 des Antriebsmittels 1. Die Achse von Motor 17 ist mit einem Drehzahlmesser 18 gekoppelt. Die Vorschubsteuerung 11 vergleicht die Messwerte des Drehzahlmessers 18 mit den Messwerten des optischen Sensors 3 und kann so den Schlupf überwachen. Die Schweissanlagensteuerung 10 kommuniziert mit der Vorschubsteuerung 11, der Schweissstromsteuerung 8 und der Robotersteuerung 9. Die Schweissstromsteuerung 8 steuert und regelt den Schweisstrafo 12. Die Robotersteuerung 9 steuert und regelt den Roboterarm 13.

Fig. 5 zeigt ein Flussdiagramm eines Verfahrens zur Positionierung des Schweissdrahtes bei einer erfindungsgemässen Schweissanlage. Das Verfahren wird primär von der Anlagensteuerung 10 oder der Vorschubsteuerung 11 ausgeführt und ist insbesondere als von Computern oder Microcontrollern ausführbarer Programmcode implementiert. Das Positionieren des Schweissdrahtes ist bei der Aufnahme des Betriebes, oder nach einer Störung notwendig. Eine Störung des Schweissvorgangs wird z.B. durch eine Unregelmässigkeit des Schweissstromes oder der Schweissdrahtgeschwindigkeit festgestellt. Weil der Drahtvorschub nicht beliebig schnell gebremst werden kann, muss nach einer Störung oft vorstehender Schweissdraht 2 vor der Wiederaufnahme des Betriebs abgeschnitten werden. Bei der erfindungsgemässen Anlage ist dies nicht nötig. Der Schweissdraht 2 wird langsam zurückgezogen, bis der Sensor 3 keine Drahtgeschwindigkeit v mehr detektiert, bzw. keinen Draht 2 mehr detektiert. Anschliessend wird der Draht 2 eine bestimmte Strecke Δd vorgeschoben, vorzugsweise bis das Drahtende die Kontaktdüse 15 passiert hat und maximal ca. 1 cm darüber vorsteht. Diese Position wird im Folgenden "Startposition" genannt. Die durchschnittliche Zahl der notwendigen manuellen Eingriffe bei der Schweissanlage wird durch obiges automatisches Verfahren reduziert und es können die Kosten gesenkt werden.

Fig. 6 zeigt ein Flussdiagramm eines Verfahrens zur Korrektur der Folgen von verminderter Schweissgutzufuhr bei einer erfindungsgemässen Schweissanlage. Das Verfahren wird primär von der Anlagensteuerung 10 und sekundär von der Vorschubsteuerung 11, der Schweissstromsteuerung 8 und der Robotersteuerung 9 ausgeführt und ist insbesondere als von Computern oder Microcontrollern ausführbarer Programmcode implementiert. Wird beim Normalbetrieb der Schweissanlage eine verminderte Schweissgutzufuhr erkannt, so wird der Schweissvorgang gestoppt. Der Schweissdraht wird gemäss dem Verfahren aus Fig. 5 in eine Startposition gebracht. Anschliessend wird der Schweisskopf relativ zum Werkstück zurück zum Anfang der Störstrecke bewegt. Dann wird entlang der Störstrecke ein zweites Mal geschweisst, insbesondere unter Berücksichtigung des bereits aufgebrachten Schweissgutes, d.h. mit verminderter Schweissgutzufuhr. Sobald das Ende der Störstrecke erreicht ist, wird wieder in den Normalbetrieb gewechselt und die Drahtgeschwindigkeit auf volle Schweissgutzufuhr geregelt. Durch dieses automatisch ausgeführte Verfahren wird die durchschnittliche Zahl der notwendigen manuellen Eingriffe und/oder Betriebsunterbrüche bei der Schweissanlage reduziert und es können somit Kosten gespart werden. Zudem ist die Güte der nach dem obigen Verfahren maschinell nachgeschweissten Schweissnähte besser, als ohne Korrektur, oder aber als bei manuellem Nachschweissen.

## Patentansprüche

1. Drahtvorschubvorrichtung für Drahtschweissanlagen mit einem Vorschubmittel (1) und mindestens einem Mittel (3) zur Messung der Drahtgeschwindigkeit, **dadurch gekennzeichnet, dass** das Mittel (3) zur Messung der Drahtgeschwindigkeit diese im Wesentlichen berührungslos und direkt am Schweissdraht (2) misst.

2. Drahtvorschubvorrichtung gemäss Anspruch 1 **dadurch gekennzeichnet, dass** das Mittel (3) zur Messung der Drahtgeschwindigkeit in der Vorschubrichtung nach dem Vorschubmittel (1) angeordnet ist.

3. Drahtvorschubvorrichtung gemäss Anspruch 2, **dadurch gekennzeichnet, dass** das Mittel (3) zur Messung der Drahtgeschwindigkeit in der Vorschubrichtung nach einem Schlauchpaket (4) angeordnet ist.

4. Drahtvorschubvorrichtung gemäss einem der vorhergehenden Ansprüche, **dadurch gekennzeichnet, dass** das Mittel (3) zur Messung der Drahtgeschwindigkeit als optischer Sensor (3) ausgestaltet ist.

5. Drahtvorschubvorrichtung gemäss Anspruch 4, **dadurch gekennzeichnet, dass** der optische Sensor (3) eine Lichtquelle (5) und einen CCD-Sensor (6) insbesondere mit einer Abbildungsoptik (14) aufweist, wobei die Lichtquelle (5) insbesondere als LED ausgestaltet ist und der CCD-Sensor insbesondere ein zweidimensionales Pixel-Array aufweist.

6. Drahtvorschubvorrichtung gemäss einem der vorangehenden Ansprüche, **dadurch gekennzeichnet, dass** das Mittel (3) zur Messung der Drahtgeschwindigkeit eine Spannung generiert, welche von der jeweiligen Drahtgeschwindigkeit abhängt und insbesondere proportional zu dieser ist.

7. Drahtvorschubvorrichtung gemäss einem der vorhergehenden Ansprüche, **dadurch gekennzeichnet, dass** das Mittel (3) zur Messung der Drahtgeschwindigkeit beim Fehlen des Drahtes (2) die Geschwindigkeit Null ausgibt und/oder ein spezielles Fehlzustandssignal ausgibt.

8. Drahtvorschubvorrichtung gemäss einem der vorhergehenden Ansprüche, **dadurch gekennzeichnet, dass** das Vorschubmittel (1) einen Antrieb (17) umfasst, welcher in Abhängigkeit der gemessenen Drahtgeschwindigkeit steuerbar ist.

9. Drahtvorschubvorrichtung gemäss einem der vorangehenden Ansprüche, **dadurch gekennzeichnet, dass** die Vorrichtung einen Drehzahlmesser (18) aufweist, mit welchem die Geschwindigkeit von Antriebsrollen (16) des Vorschubmittels (1) messbar ist.

10. Drahtvorschubvorrichtung gemäss Anspruch 9, **dadurch gekennzeichnet, dass** die Vorrichtung ein Mittel (11) zur Erkennung von Schlupf aufweist, welches insbesondere Mittel zum Vergleichen der berührungslos gemessenen Drahtgeschwindigkeit und der vom Drehzahlmesser (18) gemessenen Rollengeschwindigkeit aufweist.

11. Drahtschweissanlage mit einer Drahtvorschubvorrichtung gemäss einem der vorhergehenden Ansprüche.

12. Drahtschweissanlage gemäss Anspruch 11, wobei die Drahtschweissanlage eine Schweissstromsteuerung (8) aufweist, **dadurch gekennzeichnet, dass** die Schweissstromsteuerung (8) einen Eingang für die vom Mittel (3) zur Messung der Drahtgeschwindigkeit gemessene Drahtgeschwindigkeit aufweist, und insbesondere den Schweissstrom in Abhängigkeit davon regelt.

13. Drahtschweissanlage gemäss einem der Ansprüche 11 oder 12, wobei die Drahtschweissanlage eine zentrale Anlagensteuerung (10) aufweist, **dadurch gekennzeichnet, dass** die Anlagensteuerung (10) einen Eingang für die vom Mittel (3) zur Messung der Drahtgeschwindigkeit gemessene Drahtgeschwindigkeit aufweist, und insbesondere einen Vorschub relativ zum Werkstück in Abhängigkeit davon regelt.

14. Verfahren zum Vorschieben von Schweissdraht, insbesondere in einer Drahtschweissanlage gemäss einem der Ansprüche 11 bis 13, **dadurch gekennzeichnet, dass** eine Drahtgeschwindigkeit im Wesentlichen berührungslos und direkt am Schweissdraht (2) von einem Mittel (3) zur Messung der Drahtgeschwindigkeit gemessen wird.

15. Verfahren gemäss Anspruch 14, **dadurch gekennzeichnet dass**, zum Positionieren des Endes des Scheissdrahtes (2) in einer Startposition folgende Schritte vorgesehen sind:
- Rückziehen des Schweissdrahtes (2), bis das Mittel (3) zur Messung der Drahtgeschwindigkeit keine Geschwindigkeit mehr erfasst und somit das Ende des Schweissdrahtes (2) erreicht ist und
- Vorschieben des Schweissdrahtes (2) um eine bestimmte Strecke, so dass sich das Ende des Drahtes (2) in einer Startposition befindet, wobei die Startposition insbesondere zwischen Kontaktdüse (15) und optimalem Schweisspunkt liegt.

16. Verfahren gemäss Anspruch 15, **dadurch gekennzeichnet, dass** zum Beheben von Funktionsstörungen folgende Schritte vorgesehen sind:
- Feststellen einer Funktionsstörung, insbesondere durch Messung der Drahtgeschwindigkeit und des Schweissstromes,
- Positionieren des Schweissdrahtes (2) in der Startposition,
- Zurückfahren des Schweisskopfes relativ zum Werkstück bis das Endes des von der Funktionsstörung betroffenen Schweissnahtabschnittes erreicht ist und
- Wiederaufnahme des Schweissvorgangs und insbesondere Regelung der Schweissgutzufuhr unter Berücksichtigung der bereits aufgebrachten Schweissgutmenge.
